# FASCICULE DE BREVET EUROPEEN

(11) **EP 1 721 111 B1**
(45) Date de publication et mention de la délivrance du brevet: **25.06.2008**
(21) Numéro de dépôt: 05717705.7
(22) Date de dépôt: 07.02.2005
(51) Int. Cl.: F27B 7/20

(54) **PROCEDE DE TRAITEMENT D'ALUMINIUM DANS UN FOUR ROTATIF OU REVERBERE**
VERFAHREN ZUR VERARBEITUNG VON ALUMINIUM IN EINEM ROTATIONS- ODER FLAMMOFEN
METHOD FOR PROCESSING ALUMINIUM IN A ROTARY OR REVERBERATING FURNACE

(30) Priorité: 25.02.2004 FR 0450351
(43) Date de publication de la demande: 15.11.2006
(73) Titulaire: L'AIR LIQUIDE, Société Anonyme pour l'Etude et l'Exploitation des Procédés Georges Claude, 75007 Paris (FR)
(72) Inventeur: LUCAS, Nicolas, F- 78150 LE CHESNAY (FR); ZAMUNER, Bernard, F-92380 GARCHES (FR)
(74) Mandataire: Vesin, Jacques
(86) Numéro de dépôt international: PCT/FR2005/050074
(87) Numéro de publication internationale: WO 2005/085732

(56) Documents cités:
- EP-A- 0 962 540
- EP-A- 1 243 663
- WO-A-02/20859
- US-A- 5 563 903
- US-B1- 6 247 416
- PATENT ABSTRACTS OF JAPAN vol. 0092, no. 71 (C-311), 29 octobre 1985 (1985-10-29) & JP 60 121235 A (FURUKAWA DENKI KOGYO KK), 28 juin 1985 (1985-06-28)
- PAGET M W ET AL: "A novel burner retrofit used to increase productivity in an aluminium rotary furnace" INTERNATIONAL SYMPOSIUM RECYCLING OF METALS AND ENGINEERED MATERIALS, XX, XX, 1990, pages 671-678, XP002089284
- MIHALCEA R M ET AL: "DIODE LASER SENSOR FOR MEASUREMENTS OF CO, CO2, AND CH4 IN COMBUSTION FLOWS" APPLIED OPTICS, OPTICAL SOCIETY OF AMERICA,WASHINGTON, US, vol. 36, no. 33, 20 novembre 1997 (1997-11-20), pages 8745-8752, XP000725233 ISSN: 0003-6935
- DOCQUIER N ET AL: "Combustion control and sensors: a review" PROGRESS IN ENERGY AND COMBUSTION SCIENCE, ELSEVIER SCIENCE PUBLISHERS, AMSTERDAM, NL, vol. 28, no. 2, 2002, pages 107-150, XP004332227 ISSN: 0360-1285

## Description

La présente invention concerne un procédé de traitement d'aluminium dans un four dans lequel on introduit dans le four au moins un matériau contenant de l'aluminium et éventuellement un ou plusieurs sels et/ou du laitier et/ou des crasses recyclées, on réalise la fusion de ce matériau par apport de chaleur à l'aide d'au moins un brûleur alimenté en comburant et en combustible, de manière à obtenir de l'aluminium fondu éventuellement recouvert d'un laitier comportant notamment de l'alumine, et on mesure la concentration en monoxyde de carbone et/ou en hydrogène dans l'atmosphère du four ou dans les fumées en sortie du four.

Dans le domaine de la fusion de l'aluminium secondaire, on réalise celle-ci dans un four rotatif ou un four dit à réverbération. Bien que ce procédé de fusion puisse être continu, la fusion est le plus souvent réalisée en discontinu : les matériaux sont chargés dans le four, en un ou plusieurs cycles successifs avant de couler le métal fondu vers son lieu d'utilisation. Pour cela, le métal fondu doit avoir une température d'environ 740°C. Au-delà de 750°C, la vitesse d'oxydation de l'aluminium fondu augmente considérablement, de manière presque exponentielle.

Au cours d'un cycle de fusion, on peut d'abord distinguer la période initiale, lorsque les matériaux sont solides, qui permet l'absorption d'une grande quantité de chaleur, la fusion de l'aluminium ayant lieu à environ 660°C.

Quelque soit le type de four utilisé, on constate l'existence d'un laitier ou de « crasses » a la surface du métal liquide. On distingue habituellement d'une part, les crasses dites « noires » qui sont un mélange de sels (le cas échéant, si le procédé utilise du sel), de différents composés organiques résiduels solides (hydrocarbures polycycliques aromatiques, suies, ...) qui proviennent de la pyrolyse des matériaux organiques, et plus généralement, non métalliques, présents initialement dans la charge, d'oxyde d'aluminium et d'aluminium emprisonné dans l'oxyde, et d'autre part les crasses dites « blanches », composées uniquement d'oxydes d'aluminium et d'aluminium, produites dans les fours traitant des charges « propres » constituées exclusivement d'alliages métalliques destinés à être fondus. Il est à noter que la production de « crasses noires » s'accompagnent de l'émission dans les fumées de grande quantités de composés organiques volatiles (COV), riches en hydrocarbures imbrûlés.

Ce laitier ou ces crasses renferment une quantité de métal perdu ou oxydé encore appelés « pertes au feu » qui représentent une perte de matière non négligeable pour le producteur d'aluminium et qu'il convient de réduire au minimum afin d'augmenter la rentabilité du procédé de fusion. Pour réduire cette oxydation, il est connu de maintenir la température du bain d'aluminium fondu à une valeur inférieure à environ 750°C. Mais cette méthode reste empirique car des points chauds peuvent apparaître à la surface engendrant des oxydations localisées.

D'autres solutions connues visent à éviter l'oxydation en réduisant le contact de la surface du métal avec un oxydant.

Ainsi le document JP 60121235 propose d'utiliser la mesure des teneurs en CO et en H2 contenus dans les fumées pour s'assurer que, sur un four de fusion de métaux non-ferreux, les brûleurs installés fonctionnent en mode sous-stoechiométrique dans une plage de valeurs du rapport du débit d'oxydant au débit de combustible allant de 95 à 100 %, une partie du combustible n'étant pas consommée.

Le document EP 962 540 décrit un procédé de combustion en vue de la fusion d'un métal dans un four, dans lequel un gaz riche en oxygène est envoyé dans le four, au-dessus de la flamme d'un brûleur, au contact du métal liquide.

Le brûleur fonctionnant en sous-stoechiométrie, produit une flamme réductrice qui fait écran entre le gaz riche en oxygène et la surface du métal fondu.

Le document US 5 563 903 décrit un procédé dans lequel un gaz neutre ou réducteur fait écran entre la surface du métal aluminium fondu et une zone de combustion située dans la partie supérieure du four.

Le document US 3 759 702 décrit un procédé dans lequel la fusion a lieu initialement à l'air libre, avec un brûleur mobile au-dessus de la surface des matériaux à fondre. La flamme du brûleur est légèrement sous-stoechiométrique, donc réductrice.

Toutes ces méthodes donnent des résultats approximatifs et sont appliquées pendant toute la durée de la fusion et pas uniquement lorsqu'il existe un risque d'oxydation de l'aluminium.

Il existe à ce jour un besoin pour définir un procédé de traitement de l'aluminium qui soit applicable même si la première phase n'engendre pas de crasses « noires » et donc de fortes émissions de COV, tout en limitant l'oxydation de l'aluminium au cours de la phase finale du procédé.

Le procédé selon l'invention permet de résoudre le problème posé et réduire la formation d'oxydes d'aluminium.

Il est caractérisé en ce que le comburant qui alimente au moins un brûleur comporte plus de 10 % vol. d'oxygène, de préférence au moins 21 % vol. O₂. et en ce que le procédé comporte une phase finale de réduction de l'oxydation de l'aluminium au cours de laquelle le débit de comburant est sensiblement constant tandis que le débit de combustible injecté dans au moins un brûleur est fonction de la concentration en monoxyde de carbone et/ou en hydrogène dans l'atmosphère ou les fumées, ou vice-versa (c'est-à-dire que le débit de combustible est sensiblement constant et le débit de comburant est fonction de la concentration en CO et/ou H₂ comprise dans les mêmes limites que celles définies ci-après), cette concentration en monoxyde de carbone et/ou en hydrogène étant comprise entre 3 % vol. et 15 % vol. (par vice-versa, on entend la possibilité selon laquelle le débit de combustible est constant et où le débit de comburant est fonction de la concentration en CO et/ou H₂).

De préférence, le comburant comporte plus de 88 % vol. en O₂, de préférence plus de 95 % vol. en O₂. Plus préférentiellement le comburant est de l'oxygène industriellement pur.

Le combustible peut être un hydrocarbure quelconque ou un fioul léger ou lourd (avec un système de pulvérisation de fioul adapté dans le brûleur) : de préférence on utilise le gaz naturel, le méthane, le propane, etc... Le rapport volumique oxygène sur combustible est maintenu entre 1 et 5, de préférence entre 1,5 et 3.

Selon une variante de l'invention, la concentration en CO et/ou H₂ est maintenue sensiblement constante pendant toute cette phase de réduction d'oxydation à une valeur comprise entre 6 % et 10 % vol. (la valeur de consigne C2 au cours de cette phase finale sera donc de préférence fixée à une valeur comprise dans cette plage).

En général, la phase de réduction d'oxydation est précédée par une phase de combustion des COV au cours de laquelle sensiblement tous les produits organiques présents dans le matériau sont détruits par pyrolyse, suivie éventuellement (mais non nécessairement) par une phase de stabilisation.

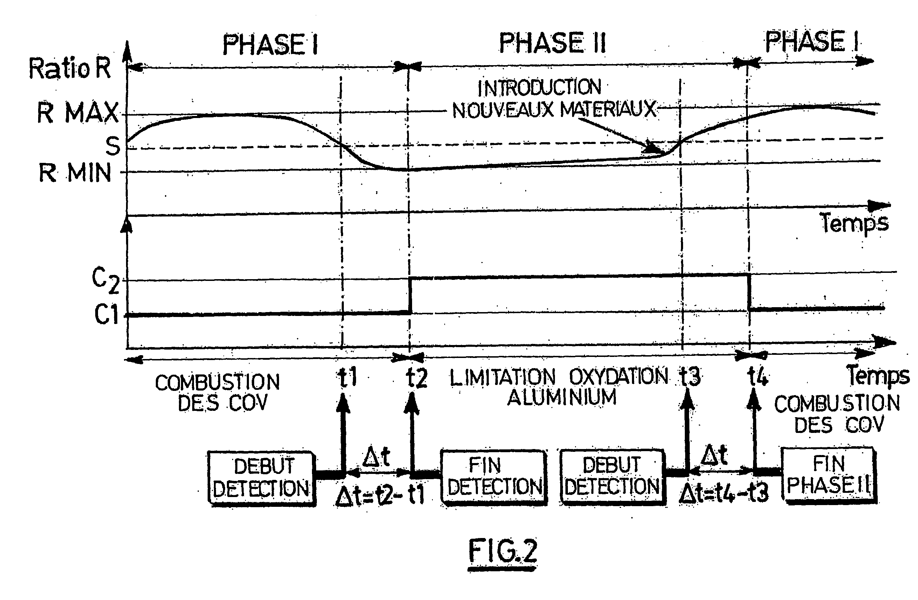

De préférence, la phase de combustion des COV se termine lorsque la valeur du ratio R des débits volumiques respectivement d'oxygène contenu dans le comburant et de combustible au cours de cette phase, devient inférieur à une valeur seuil S, définie ci-après. En général, afin de s'affranchir des fluctuations passagères, on maintiendra les conditions de cette phase de combustion des hydrocarbures encore pendant une durée Δt (comprise entre 5% et 20% de la phase de combustion des hydrocarbures considérée) de manière à confirmer le passage d'une valeur de R < S, avant de passer dans la deuxième phase en changeant la valeur de consigne (qui passe d'une valeur C1 à une valeur C2) du CO mesuré dans le four ou les fumées, (compte tenu des fluctuations possibles des variations de la concentration en CO, comme exemplifié sur la fig. 2, par exemple). Cette phase de durée Δt sera appelée ci-après phase de détection

Selon un mode préférentiel de l'invention, le procédé comportera deux phases (qui peuvent se répéter plusieurs fois avant la coulée de l'aluminium liquide) éventuellement séparées par une phase de détection généralement courte, destinée à s'assurer que la destruction des produits organiques est terminée.

De préférence, au cours de la première phase, la concentration en CO dans l'atmosphère du four et/ou des fumées, sera comprise entre 0,1 % vol et 5 % vol (valeur de consigne C1). La limite inférieure est en fait déterminée de telle manière que l'on ait au plus 1000 ppm d'oxygène dans les fumées (ou l'atmosphère).

En général, on a constaté qu'une valeur de CO de l'ordre de 0,5 % vol. était appropriée. Au cours de cette première phase, le but recherché est d'obtenir le moins possible de CO dans l'atmosphère, c'est-à-dire de régler la valeur de consigne C1 de la concentration en CO à la valeur la plus faible possible dans l'intervalle 0,1 à 5 % vol, tout en conservant une atmosphère non oxydante dans le four.

En l'absence de contrôle, la concentration en CO et/ou H₂ se trouve au-delà de la valeur de consigne C1 choisie ci-dessus. Inversement, au cours de la phase finale, la concentration en H₂ et/ou CO (en l'absence d'application de l'invention) est inférieure à la valeur de consigne C2, et l'un des buts de l'invention est d'augmenter cette concentration.

Ainsi dans la phase initiale, il convient en général grâce à la régulation sur la valeur de consigne C1, de diminuer cette concentration en CO et/ou H₂, tandis que dans la phase finale, la régulation sur la valeur de consigne C2, d'augmenter la concentration en CO et/ou H₂.

Le passage d'une phase à l'autre est basé selon l'invention, par la détection; d'une variation durable du ratio R ((débit volumique d'oxygène)/(débit volumique de combustible) = R) passant d'une valeur supérieure au seuil S à une valeur inférieure au seuil S.

Le seuil S du ratio R est défini par des essais préalables sur le four où l'invention sera mise en oeuvre, de la façon suivante :
- on fixe la valeur de consigne C1 sur laquelle on va réguler la concentration en CO dans les fumées et/ou l'atmosphère (grâce à une variation du ratio R) à la valeur la plus faible possible pour le four testé, sa charge (habituelle) et le détecteur de CO utilisé (généralement une diode laser selon l'invention). Cette valeur est souvent de l'ordre de 0,1 % vol. Le four ayant une charge telle que traitée habituellement, on régule la valeur de CO sur cette valeur de consigne très basse : le ratio des débits volumiques oxygène/combustible va, après un certain temps, se stabiliser. Le ratio R auquel on obtient cette stabilisation sera le seuil S défini ci-avant.

Ainsi dans le procédé selon l'invention, on procède durant la première phase (de combustion des composés organiques volatiles COV) à une régulation du CO et/ou H₂ autour d'une valeur de consigne comprise entre 0,1 % vol et 5 % vol (0,5 % est souvent satisfaisant) et on mesure le ratio R défini ci-dessus. Lorsque R diminue et devient inférieur à S, on continue à réguler, en général, sur la valeur de consigne C1, puis après quelques instants (après être sûr que l'on a bien changé de phase, c'est-à-dire que tous les COV sont brûlés) on change la valeur de consigne pour une nouvelle valeur de consigne C2, comprise entre 3 % et 15 % vol., de préférence entre 6 et 10 % vol., début de la phase finale au cours de laquelle le ratio R va rester inférieur à S jusqu'à la coulée du métal liquide.

On peut, au contraire après une certaine durée en phase finale, réintroduire des déchets d'aluminium (.... boîtes, etc...) de manière à ré-engendrer une phase initiale au cours de laquelle on va à nouveau réguler autour de la valeur de consigne C1, puis comme précédemment réguler ensuite autour de la valeur de consigne C2.

Selon une variante de l'invention ne comportant qu'une phase finale (charge propre sans émission de COV), on réalise une régulation directement sur une valeur C2, comprise entre 3 % et 15 % vol. de CO, valeur C2 supérieure à la concentration en CO dans le même four avec la même charge, en l'absence de régulation sur une valeur de consigne par le CO et/ou le H₂.

La phase de réduction d'oxydation de l'aluminium se termine par réintroduction dans la four d'une nouvelle charge de matériau contenant de l'aluminium, ou bien par la coulée d'aluminium liquide vers son point d'utilisation.

Le matériau contenant de l'aluminium dans le cadre de l'invention pourra être notamment, par exemple de l'aluminium en lingot, des copeaux de tournage de pièces en aluminium, des boîtes de boissons, de conserves, des rebuts, des chutes de production, des crasses, du laitier contenant de l'aluminium, et d'une manière générale tout matériau contenant de l'aluminium. Bien entendu, l'invention s'applique également aux fours de maintien en température de l'aluminium liquide.

L'invention sera mieux comprise à l'aide des exemples de réalisation suivants, donnés à titre d'exemple non limitatif, conjointement avec les figures qui représentent :
- la figure 1, une vue schématique d'un four avec un seul brûleur représenté, l'analyse des fumées et le contrôle du brûleur ;
- la figure 2, un diagramme explicatif des phases I et II d'un procédé selon l'invention ;
- la figure 3, un graphique explicitant les variations de (CO) en fonction du temps illustrant les phases (ou sous-phases) du procédé selon l'invention ;

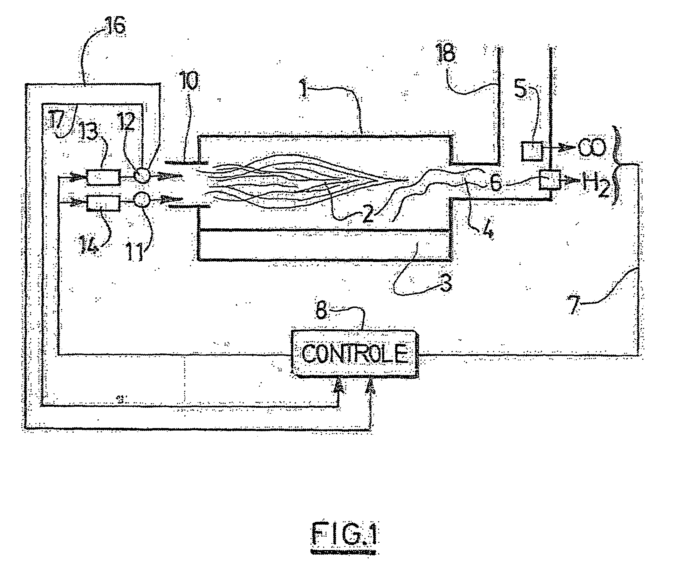

La figure 1 est une vue schématique d'un four 1 (vu en coupe) et du système de contrôle selon l'invention.

Un brûleur 10 crée une flamme 2 qui chauffe et fond le métal 3, sous forme liquide. Les fumées 4 issues du four 1 et résultant de la combustion, notamment du brûleur sont évacuées par le conduit 18, dans lequel sont placés des détecteurs 5 et 6 (connues en soi) de CO et/ou de H₂ respectivement permettant de mesurer la concentration en CO et/ou H₂ dans lesdites fumées. Le signal issu de chacun des détecteurs 5 et 6 est transmis par l'intermédiaire de la ligne de connexion à un ensemble de contrôle 8 dont le fonctionnement sera expliqué ci-après. Le brûleur 10 est alimenté respectivement en comburant 13 et combustible 14 par l'intermédiaire de vannes commandées (débitmètres massiques, par exemple) respectivement 12 et 11 permettant de délivrer un débit adapté de comburant et de combustible au brûleur. Ce débit est commandé par le dispositif de contrôle 8, par l'intermédiaire de la ligne de connexion 15. Les lignes de connexion 17 et 16 transmettent la mesure de l'ouverture des vannes 12 et 11 au système de contrôle 8, qui reçoit également une information de température du métal fondu 3 par l'intermédiaire d'un capteur. Le système de contrôle 8 comporte un réglage du point de consigne de la concentration en CO (et/ou H₂), qui peut être modifié en fonction du temps, notamment pour passer de la valeur C1 à la valeur C2.

Selon que la mesure de la concentration en CO et/ou H₂ transmise par les capteurs 5 et/ou 6 au dispositif de contrôle 8 est supérieure ou inférieure audit point de consigne, celui-ci engendre un signal de commande via la connexion 15 aux vannes commandées 12 et 11 qui régulent l'injection du comburant 13 et du combustible 14 pour obtenir une réduction ou une augmentation de la concentration en monoxyde de carbone et/ou hydrogène dans les fumées.

Sur la figure 2 sont représentées les variations typiques du ratio R (le débit de comburant ou préférentiellement le débit de combustible est maintenu constant) et celles de la concentration de CO et/ou H₂ dans les fumées dans le cadre de la gestion à deux phases du cycle de fusion décrite précédemment. Lors de la phase I, la consigne du CO et/ou H₂ est fixée à la valeur C1 comprise entre 0,1 % et 5 % vol alors qu'en phase II, cette consigne est réglée à la valeur C2, sensiblement élevée, entre 3 % et 15 % avec dans tous les cas dans un même cycle successif de phases I et II C1 ≠ C2 et C1 < C2 (si l'on avait C1 = C2, on aurait alors une seule phase). En début de fusion, afin d'asservir le CO et/ou H₂ à la consigne, le régulateur augmente la valeur du ratio R afin de fournir en excès le comburant pour brûler les COV. La production de COV par la charge et leur combustion atteint un maximum puis diminue pour devenir nulle en fin de phase I. La ratio R suit cette tendance en passant par un maximum, noté R_MAX avant de décroître en phase I. Compte tenu de la consigne C1, lorsque les COV sont presque entièrement consommés, le ratio R franchit nécessairement et définitivement le seuil S, défini précédemment, avant d'atteindre un minimum, noté R_MIN. Lorsque le ratio R atteint le seuil S, il reste en effet une faible quantité de COV dans la charge qui engendre un niveau de CO et/ou H₂ inférieur à la consigne C1. A partir de cet instant, le régulateur contrôle le ratio R en le diminuant davantage (production de CO et/ou H₂ par le brûleur), afin de compenser l'écart par rapport à cette consigne C1. Tous les COV sont brûlés lorsque le ratio atteint R_MIN. II est alors temps de changer de stratégie de contrôle car la phase II commence. L'invention consiste à utiliser l'instant t1 de franchissement du seuil S couplé à une durée de détection Δt comprise entre 5 % et 20 % de la phase I de fusion considérée (qui se termine à l'instant t1) pour engendrer un changement de stratégie de contrôle, à l'instant t2 défini par t2 = t1 + Δt. A cet instant, la valeur de consigne devient égale à C2.

Selon une variante de l'invention, on peut détecter, inversement, l'introduction de nouveaux matériaux dans le four et basculer, de la phase de limitation de l'oxydation à celle de combustion des COV. En effet, si l'on considère un chargement d'aluminium lors de la phase II, il y a dégagement de COV lié à une charge et le régulateur contrôle le ratio R en l'augmentant (diminution de la production de CO et/ou H₂ par le brûleur), afin de compenser l'écart par rapport à cette consigne C2. De la même façon, le ratio R dépasse le seuil S à un instant t3 donné, indiquant que le procédé physique est dans la phase I, ainsi le changement de stratégie de contrôle, commandé par l'indicateur, à lieu à l'instant t4 défini par t4 = t3 + Δt. A cet instant t4, la consigne est donc ramenée à la valeur C1 définie ci-dessus. Pour l'ensemble de contrôle du procédé, la fin de la phase II est donc l'instant t4.

### Exemple de réalisation :

Dans un four rotatif équipé d'un brûleur de 13 MW, on réalise le chargement de 27 tonnes de sel et de 27 tonnes de déchets d'aluminium, on chauffe la charge jusqu'à consommer 2550 Nm³ de gaz naturel, puis on charge à nouveau 65 tonnes de déchets d'aluminium (dans cet exemple, ce sont des boîtes de boisson) et on chauffe la charge jusqu'à consommer 850 Nm³ de gaz naturel supplémentaire. Ensuite, on charge à nouveau 35 tonnes de déchets d'aluminium (tournures d'aluminium) et on chauffe la charge jusqu'à consommation de 1350 Nm³ de gaz naturel supplémentaire, on réalise ensuite la coulée de 99 tonnes d'aluminium, on procède alors au réchauffage des sels et crasses présents dans le four jusqu'à la consommation totale de 5500 Nm³ de gaz naturel. Ensuite, on procède à la coulée de l'aluminium restant dans le four : 9 tonnes d'aluminium.

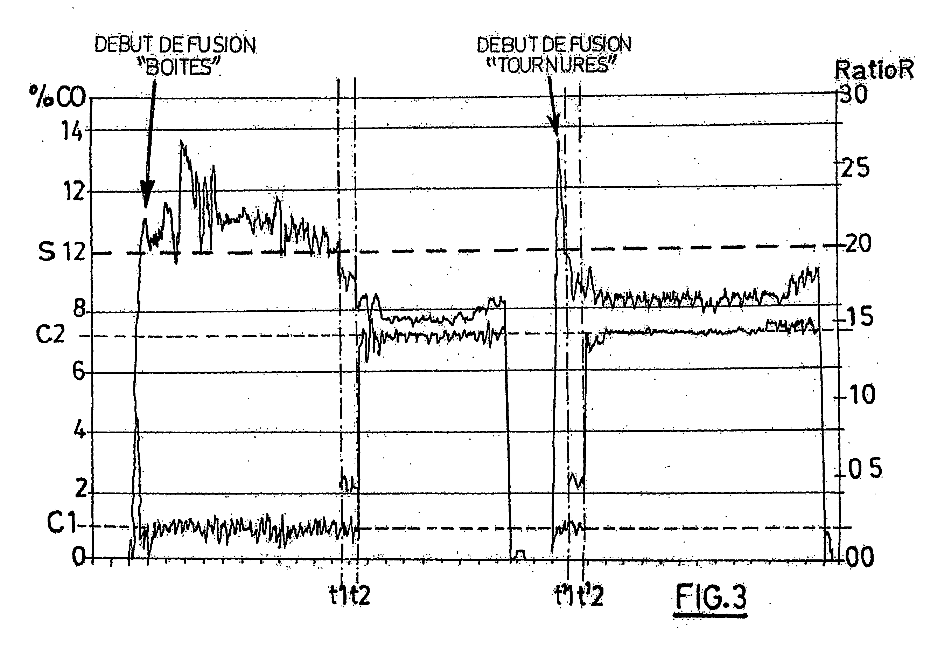

Sur la figure 3 sont représentées des variations du CO mesuré dans les fumées et celles du ratio R, défini précédemment, lors de la fusion des deux chargements d'aluminium décrits ci-dessus. Sur ces courbes, on voit clairement l'effet du changement automatique de stratégie. En effet, l'indicateur selon l'invention pilote le changement de phase au milieu de la fusion à l'instant t2 car la première charge est constituée de canettes de boissons recouvertes de peinture, donc fortement chargées en composés organiques. D'autre part, lors de la fusion de la seconde charge, moins riche en composés organiques (tournures d'aluminium), l'indicateur contrôle le changement de phase en t'2 peu après le début de la phase, optimisant ainsi le démarrage de la stratégie de contrôle adaptée à la phase II. Cet indicateur permet de diminuer les pertes par oxydation quel que soit le type de charge en entrée du four comme le montre le tableau ci-après :

| | Type de matériau chargé | Unité | Procédé sans régulation | Procédé selon l'invention |
|---|---|---|---|---|
| Poids d'aluminium oxydé | boîtes | kg | 1800 | 1750 |
| Poids d'aluminium oxydé | tournures | kg | 2000 | 1750 |

## Revendications

1. Procédé de traitement d'aluminium dans un four dans lequel on introduit dans le four un matériau contenant de l'aluminium et éventuellement un ou plusieurs sels, on réalise la fusion de ce matériau par apport de chaleur à l'aide d'au moins un brûleur alimenté en comburant et en combustible, de manière à obtenir de l'aluminium fondu éventuellement recouvert d'un laitier comportant notamment de l'alumine et au moins un sel, et on mesure la concentration en monoxyde de carbone CO et/ou en hydrogène H₂ dans l'atmosphère du four ou dans les fumées en sortie du four, **caractérisé en ce que** le comburant qui alimente au moins un brûleur comporte plus de 10 % volume d'oxygène, de préférence plus de 21 % vol. d'oxygène, et **en ce que** le procédé comporte une phase finale de réduction de l'oxydation de l'aluminium fondu au cours de laquelle :
- le débit de comburant est sensiblement constant tandis que le débit de combustible injecté dans au moins un brûleur est fonction de la concentration en monoxyde de carbone et/ou de l'hydrogène dans l'atmosphère ou les fumées, ou
- le débit de combustible est sensiblement constant tandis que le débit de comburant injecté dans au moins un brûleur est fonction de la concentration en monoxyde de carbone et/ou de l'hydrogène dans l'atmosphère ou les fumées,
cette concentration en monoxyde de carbone et/ou en hydrogène étant régulée sur une valeur de consigne C2 comprise entre 3 et 15 % vol.

2. Procédé selon la revendication 1, **caractérisé en ce que** le comburant comporte plus de 88 % vol. en O₂, de préférence plus de 95 % vol. en O₂.

3. Procédé selon la revendication 1 ou 2, **caractérisé en ce que** le comburant est de l'oxygène industriellement pur.

4. Procédé selon la revendication 1, **caractérisé en ce que** le combustible est choisi parmi le gaz naturel, les hydrocarbures, le fioul léger ou lourd.

5. Procédé selon l'une des revendications 1 à 4, **caractérisé en ce que** le rapport volumique oxygène sur combustible est maintenu entre 1 et 5, de préférence 1,5 et 3.

6. Procédé selon l'une des revendications 1 à 5, **caractérisé en ce que** la concentration en monoxyde de carbone et/ou en hydrogène est maintenue sensiblement constante pendant toute cette phase de réduction d'oxydation à une valeur C2 comprise entre 3 % et 15 %, de préférence 6 à 10 % vol.

7. Procédé selon les revendications 1 à 6, **caractérisé en ce que** la phase de réduction d'oxydation est précédée par une phase de combustion des hydrocarbures au cours de laquelle sensiblement tous les produits organiques présents dans le matériau sont détruits par pyrolyse.

8. Procédé selon la revendication 7, **caractérisé en ce que** la phase de combustion des hydrocarbures est considérée comme terminée lorsque la valeur mesurée du ratio R du débit volumique d'oxygène divisé par le débit volumique de combustible devient inférieure à une valeur S prédéterminée..

9. Procédé selon les revendications 7 et 8, **caractérisé en ce qu'**une phase de stabilisation se déroule avec une concentration CO et/ou H2 mesurée régulée sur la valeur de consigne C1, cette phase se terminant lorsque le ratio R atteint son minimum.

10. Procédé selon l'une des revendications 1 à 9, **caractérisé en ce que** la phase de réduction d'oxydation de l'aluminium se termine par réintroduction dans la four d'une nouvelle charge de matériau contenant de l'aluminium.

11. Procédé selon l'une des revendications 1 à 10, **caractérisé en ce que** la mesure de CO est réalisée à l'aide d'une diode laser.

## Claims

1. A method for processing aluminum in a furnace, in which an aluminum-containing material and, optionally, one or more salts, are introduced into the furnace, this material is melted by heating using at least one burner supplied with oxidizer and with fuel, in order to obtain molten aluminum possibly covered with a slag comprising, in particular, alumina and at least one salt, and the carbon monoxide CO and/or hydrogen H₂ concentration is measured in the furnace atmosphere or in the flue gases, **characterized in that** the oxidizer supplied to at least one burner comprises over 10% by volume of oxygen, preferably over 21% by volume of oxygen, and **in that** the method comprises a final phase for decreasing the oxidation of the molten aluminum, during which:
- the oxidizer flow rate is substantially constant while the flow rate of fuel injected into at least one burner is a function of the carbon monoxide and/or hydrogen concentration in the atmosphere or the flue gases; or
- the fuel flow rate is substantially constant while the flow rate of oxidizer injected into at least one burner is a function of the carbon monoxide and/or hydrogen concentration in the atmosphere or the flue gases this carbon monoxide and/or hydrogen concentration being regulated to a setpoint C2 of between 3 vol% and 15 vol%.

2. Method according to Claim 1, **characterized in that** the oxidizer comprises over 88 vol% of O₂, preferably over 95 vol% of O₂.

3. Method according to either of Claims 1 and 2, **characterized in that** the oxidizer is industrially pure oxygen.

4. Method according to Claim 1, **characterized in that** the fuel is selected from natural gas, hydrocarbons, and light or heavy fuel oil.

5. Method according to one of Claims 1 to 4, **characterized in that** the volumetric ratio of oxygen to fuel is maintained between 1 and 5, preferably between 1.5 and 3.

6. Method according to one of Claims 1 to 5, **characterized in that** the carbon monoxide and/or hydrogen concentration is maintained substantially constant throughout this oxidation limitation phase at a value C2 of between 3 vol% and 15 vol%, preferably between 6 vol% and 10 vol%.

7. Method according to Claims 1 to 6, **characterized in that** the oxidation limitation phase is preceded by a hydrocarbon combustion phase during which substantially all the organic compounds present in the material are destroyed by pyrolysis.

8. Method according to Claim 7, **characterized in that** the hydrocarbon combustion phase is considered to terminate when the measured value of the ratio R of the volumetric flow rate of oxygen to the volumetric flow rate of fuel falls below a predefined value S.

9. Method according to Claims 7 and 8, **characterized in that** a stabilization phase takes place with a measured CO and/or H₂ concentration regulated to the setpoint C1, this phase terminating when the ratio R reaches its minimum.

10. Method according to one of Claims 1 to 9, **characterized in that** the aluminum oxidation limitation phase terminates with the reintroduction, into the furnace, of a new charge of aluminum-containing material.

11. Method according to one of Claims 1 to 10, **characterized in that** the CO concentration is measured using a laser diode.

## Patentansprüche

1. Verfahren zur Behandlung von Aluminium in einem Ofen, bei dem in den Ofen ein Material eingeführt wird, das Aluminium und gegebenenfalls ein oder mehrere Salze enthält, die Fusion dieses Materials durch Hitzeeintrag mit Hilfe mindestens eines Brenners ausgeführt wird, der mit einem Oxidationsmittel und einem Brennstoff versorgt wird, um geschmolzenes Aluminium zu erhalten, das gegebenenfalls mit einer Schlacke überzogen ist, die vor allem Aluminiumoxid und mindestens ein Salz umfasst, und die Konzentration an Kohlenmonoxid CO und/oder Wasserstoff H₂ in der Atmosphäre des Ofens oder in den Rauchgasen am Ausgang des Ofens gemessen wird, **dadurch gekennzeichnet, dass** das Oxidationsmittel, das mindestens einen Brenner versorgt, mehr als 10 Vol.-% Sauerstoff, bevorzugt mehr als 21 Vol.-% Sauerstoff umfasst, und **dadurch**, dass das Verfahren eine Endphase der Reduktion der Oxidation des geschmolzenen Aluminiums umfasst, in deren Verlauf
- die Durchflussrate des Oxidationsmittels im Wesentlichen konstant ist, während die Durchflussrate des Brennstoffs, der in mindestens einen Brenner eingespritzt wird, von der Konzentration an Kohlenmonoxid und/oder an Sauerstoff in der Atmosphäre oder den Rauchgasen abhängt, oder
- die Durchflussrate des Brennstoffs im Wesentlichen konstant ist, während die Durchflussrate des Oxidationsmittels, das in mindestens einen Brenner eingespritzt wird, von der Konzentration an Kohlenmonoxid und/oder an Sauerstoff in der Atmosphäre oder den Rauchgasen abhängt,
wobei diese Konzentration auf einen Sollwert C2 im Bereich zwischen 3 und 15 Vol.-% eingestellt ist.

2. Verfahren nach Anspruch 1, **dadurch gekennzeichnet, dass** das Oxidationsmittel mehr als 88 Vol.-% O₂, bevorzugt mehr als 95 Vol.-% O₂ umfasst.

3. Verfahren nach Anspruch 1 oder 2, **dadurch gekennzeichnet, dass** des Oxidationsmittel industriell reiner Sauerstoff ist.

4. Verfahren nach Anspruch 1, **dadurch gekennzeichnet, dass** der Brennstoff ausgewählt ist aus Erdgas, Kohlenwasserstoffen, leichtem oder schwerem Heizöl.

5. Verfahren nach einem der Ansprüche 1 bis 4, **dadurch gekennzeichnet, dass** das Volumenverhältnis Sauerstoff zu Brennstoff zwischen 1 und 5, bevorzugt zwischen 1,5 und 3 gehalten wird.

6. Verfahren nach einem der Ansprüche 1 bis 5, **dadurch gekennzeichnet, dass** die Konzentration an Kohlenmonoxid und/oder an Sauerstoff im Wesentlichen während der gesamten Phase der Reduktion der Oxidation auf einem Wert C2 im Bereich zwischen 3 Vol.-% und 15 Vol.-%, bevorzugt zwischen 6 und 10 Vol.-% konstant gehalten wird.

7. Verfahren nach den Ansprüchen 1 bis 6, **dadurch gekennzeichnet, dass** der Phase der Reduktion der Oxidation eine Phase der Verbrennung von Kohlenwasserstoffen vorausgeht, in deren Verlauf im Wesentlichen alle organischen Produkte, die in dem Material vorhanden sind, durch Pyrolyse zerstört werden.

8. Verfahren nach Anspruch 7, **dadurch gekennzeichnet, dass** die Phase der Verbrennung der Kohlenwasserstoffe als beendet betrachtet wird, wenn der Wert, der für das Verhältnis R der Sauerstoffvolumendurchflussrate geteilt durch die Brennstoffvolumendurchflussrate gemessen wird, unterhalb eines vorbestimmten Werts S fällt.

9. Verfahren nach den Ansprüchen 7 und 8, **dadurch gekennzeichnet, dass** eine Phase der Stabilisierung mit einer gemessenen Konzentration an CO und/oder H2 abläuft, die auf den Sollwert C1 eingestellt ist, wobei diese Phase endet, wenn das Verhältnis R seinen Minimalwert erreicht.

10. Verfahren nach einem der Ansprüche 1 bis 9, **dadurch gekennzeichnet, dass** die Phase der Reduktion der Oxidation des Aluminiums durch das erneute Einführen in den Ofen einer neuen Beschickung mit Material endet, das Aluminium enthält.

11. Verfahren nach einem der Ansprüche 1 bis 10, **dadurch gekennzeichnet, dass** das Messen von CO mit Hilfe einer Laserdiode ausgeführt wird.
